# EUROPEAN PATENT APPLICATION

(11) **EP 3 035 059 A1**
(43) Date of publication of application: **22.06.2016**
(21) Application number: 14198688.5
(22) Date of filing: 17.12.2014
(51) Int. Cl.: G01N 35/00, G01N 35/04, B65G 17/20, B65G 47/90, B65G 47/91, B65G 47/96

(54) **Sample container transport device and laboratory automation system**

(71) Applicant: Roche Diagnostics GmbH, 68305 Mannheim (DE); F. Hoffmann-La Roche AG, 4070 Basel (CH)
(72) Inventor: Bühr, Fritz, 71737 Kirchberg/Murr (DE)
(74) Representative: Patentanwälte Ruff, Wilhelm, Beier, Dauster & Partner mbB

(57) **Abstract**

The invention relates to a sample container transport device in which a sample container can be tilted during acceleration or deceleration in order to decrease the likelihood of spilling even if the sample container is open. The invention relates further to a laboratory automation system comprising such a sample container transport device.

## Description

### Applicable field and prior art

The invention relates to a sample container transport device comprising a moving structure and a holding means to hold the sample container below the moving structure. The invention relates further to a laboratory automation system comprising such a sample container transport device.

Sample container transport devices are used, for example, in laboratory automation systems in order to transport sample containers between different stations. The stations typically perform different processing tasks like re-capping or analyzing of samples contained in the sample containers. As laboratory automation systems are typically designed for a high throughput, it is desirable to adapt a sample container transport device such that it can move a sample container as fast as possible.

Conventional sample container transport devices suffer from the problem that sample containers, which are typically embodied as tubes with an open upper side, have to be transported without a cap, at least in some cases. As this induces the risk of spilling of the sample out of the sample container, the maximum acceleration and deceleration of the sample container is limited.

### Object and solution

It is an object of the present invention to provide for a sample container transport device that is adapted to allow higher acceleration or deceleration values even if a sample container is open. It is a further object of the present invention to provide for a laboratory automation system comprising such a sample container transport device.

This object is solved by a sample container transport device according to claim 1 and a laboratory automation system according to claim 14.

The invention relates to a sample container transport device comprising a moving structure, a holding means and a tilting element. The holding means is adapted to hold the sample container vertically below the moving structure. The tilting element connects the holding means to the moving structure such that the sample container is in a vertical orientation when the moving structure is in a resting state. Further, the tilting element connects the holding means to the moving structure such that the sample container is able to tilt out of the vertical orientation when the moving structure is in a moving state. The tilting element may connect the holding means to the moving structure swivel-mounted.

By means of the sample container transport device, higher acceleration and deceleration values can be achieved without the risk of spilling even if a sample container is open at its upper side. The invention is based on the fact that a surface of a sample contained in the sample container, having typically a horizontal orientation when the sample container is in a resting state or is moving with a constant velocity, has an inclined surface during acceleration due to inertia forces. This inclined surface leads to a reduction of a distance between the surface of the sample and the opening of the sample container, significantly increasing the risk of spilling. By tilting the sample container such that this distance is increased, the risk of spilling can be significantly lowered.

A moving structure can be some kind of carriage or slide that can typically be moved along a predefined path. For movement, a driving means such as an electric motor can be used.

According to an embodiment, the holding means is a chuck being adapted for holding the sample container by contacting the sample container at a top portion of the sample container. Such a chuck can typically be operated automatically for holding and releasing the sample container.

According to an embodiment, the tilting element is a hinge, preferably a cardan joint, allowing for free pivotal movement of the holding means. This embodiment allows for a passive tilting of the sample container by inertia forces that are present during acceleration or deceleration. A free pivotal movement is especially a movement without active control of the pivotal movement. This allows for a technically simple embodiment.

According to an embodiment, the tilting element is a flexible bar. A number of bimetal stripes can be arranged at an outer face of the flexible bar for active tilting of the flexible bar by applying electric current through the bimetal stripes. Such an embodiment allows for an active tilting of the sample container, which can be utilized in order to more precisely adapt the tilting to the requirement of spilling prevention.

According to an embodiment, the flexible bar is a torsion rod. This has been proven suitable for typical embodiments.

According to an embodiment, a total of three bimetal stripes are arranged besides the flexible bar at three of four positions, the four positions being arranged with an angle of 90° between each two neighboring positions. Such an arrangement of bimetal stripes has been proven suitable for typical applications. Tilting can be effected in all necessary directions.

According to an embodiment, the sample container transport device comprises a rotating device connecting the flexible bar to the moving structure for rotating the flexible bar around a vertical axis. Such a rotating device allows for adaptation of a tilting angle provided by the bimetal stripes regarding the direction in which tilting is to be effected. For example, the rotating device can compensate for an arcuate movement of the moving structure or it can be used in order to tilt the sample container in two antiparallel directions for compensation of both acceleration and deceleration. It should be noted that it is not necessary that the rotating device is the only connection between the flexible bar and the moving structure.

According to an embodiment, the sample container transport device comprises an electronic control unit being configured to control current flow through each of the bimetal stripes. This electronic control unit can especially be used in order to calculate and effect most effective tilting for certain conditions, for example acceleration or deceleration conditions.

According to an embodiment, the electronic control unit is configured to effect tilting of the flexible bar by controlling current flow such that an acceleration of the moving structure is compensated at a sample contained in the sample container. This typically means that the sample container is tilted in a direction and at an angle such that the sample container resembles an inclination of the surface of the sample induced by inertia forces during acceleration or deceleration. Typically it means that a minimum distance between an inclined surface of the sample and an opening of the sample container is increased.

Typically, a higher tilting can be induced by a higher current. It should further be noted that deceleration can in principle be treated as a negative acceleration.

According to an embodiment, the electronic control unit is configured to effect tilting of the flexible bar by controlling current flow such that tilting of a bottom part of the sample container is effected opposite to a direction of acceleration of the moving structure. It has been found that such a tilting advantageously increases a minimum distance between an inclined surface of the sample and an opening of the sample container in order to decrease likelihood of spilling.

It should be noted that in a preferred embodiment the sample container is tilted by an angle being identical to an inclination angle of the surface of the sample induced by inertia forces.

According to an embodiment, the electronic control unit is configured to rotate the flexible bar such that tilting of a bottom part of the sample container is effected opposite to a direction of acceleration of the moving structure. Rotating is preferably performed by a rotating device connecting the flexible bar to the moving structure. For example, the rotating device as discussed above can be used. Rotation allows for a specific adaptation of the tilting of the sample container to a specific direction of acceleration or deceleration.

According to an embodiment, the sample container transport device comprises a drive unit adapted to drive the moving structure. The drive unit is controllable by the electronic control unit, and the electronic control unit is configured to effect tilting of the flexible bar synchronously to a movement of the drive unit. Typically, this means that the electronic control unit is configured to effect tilting in one or several ways as described above such that a minimum distance between an inclined surface and an opening is increased. Synchronous tilting can mean that the electronic control unit calculates optimal tilting according to the acceleration presently applied to the moving structure, especially in order to reduce the risk of spilling.

The invention further relates to a laboratory automation system. The laboratory automation system comprises a number of pre-analytical, analytical and/or post-analytical stations, and a sample container transport device according to the invention. The sample container transport device is adapted to transport sample containers between the stations.

By means of the laboratory automation system, the advantages discussed above with respect to the sample container transport device can be made use of for a laboratory automation system. Regarding the sample container transport device, all embodiments and variations as discussed herein can be used.

### Brief description of the drawings

The invention will now be described in detail with reference to the schematic drawings, wherein
- fig. 1a: shows a laboratory automation system with a sample container transport device according to a first embodiment,
- fig. 1b: shows the sample container transport device of fig. 1a in more detail,
- fig. 1c: shows the sample container transport device of fig. 1b during acceleration,
- fig. 2a: shows a sample container transport device according to a second embodiment,
- fig. 2b: shows the sample container transport device of fig. 2a during acceleration, and
- fig. 2c: shows the sample container transport device of figs. 2a and 2b in a cross-sectional view.

### Detailed description of the embodiments

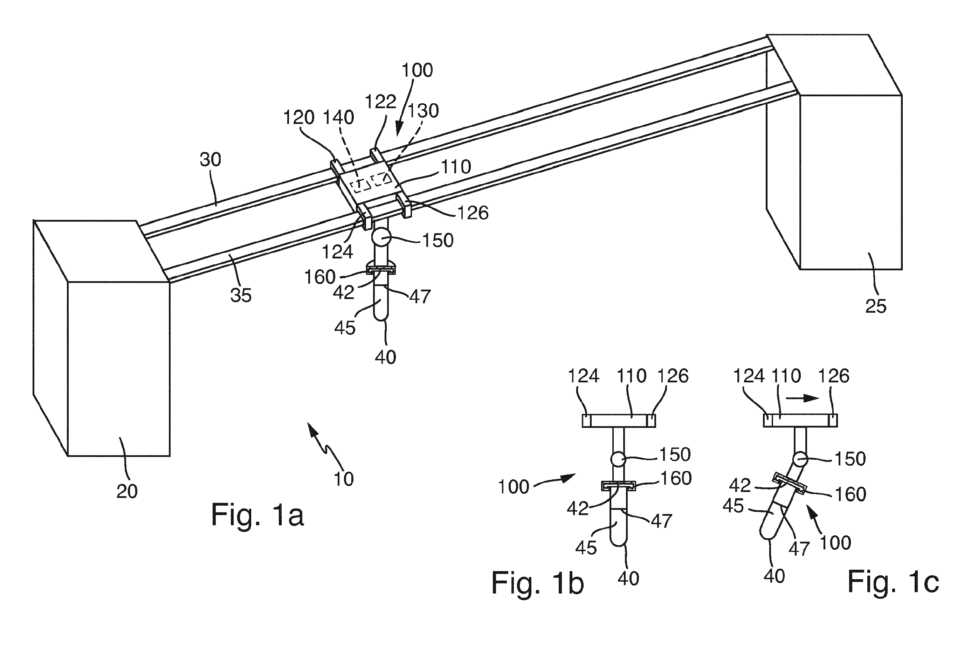

Fig. 1a shows a laboratory automation system 10 comprising a sample container transport device 100 according to a first embodiment. The laboratory automation system 10 comprises a first laboratory station 20 and a second laboratory station 25, wherein these stations are schematic representatives for pre-analytical, analytical and/or post-analytical stations that are typically used in a laboratory automation system. The laboratory stations 20, 25 are adapted to perform certain tasks on samples that are to be analyzed in a laboratory.

Between the first laboratory station 20 and the second laboratory station 25, a first rod 30 and a second rod 35 are arranged. The rods 30, 35 are oriented parallel to each other. The rods 30, 35 are used as a linear guiding for the sample container transport device 100, as will be explained in further detail below.

The sample container transport device 100 comprises a moving structure 110, which is adapted to be supported by the rods 30, 35. For that purpose, a first holding means 120, a second holding means 122, a third holding means 124 and a fourth holding means 126 are arranged at an outer side of the moving structure 110 in order to secure the moving structure 110 at the rods 30, 35 and to slide along the rods 30, 35. For movement along the rods 30, 35, the sample container transport device 100 comprises a drive unit in the form of an electric motor 130. In order to control operation of the sample container transport device 100, the sample container transport device 100 comprises an electronic control unit 140. The electronic control unit 140 comprises a processor means and a storage means, wherein the storage means stores program code that, when executed by the processor means, causes the electronic control unit 140 to behave in a certain way. It is to be understood that the electric motor 130 and the electronic control unit 140 are only shown schematically.

Below the moving structure 110 a tilting element in the form of a hinge 150 is provided. The hinge 150 is embodied as a cardan joint. Below the hinge 150, there is arranged a holding means in the form of a chuck 160. The chuck 160 is adapted to hold a sample container 40 below the sample container transport device 100. In the figures, the chuck 160 is generally shown in a cross-sectional view in order to show also the upper side of the sample container 40.

In the sample container 40, there is contained a liquid sample 45 that is to be analyzed by the laboratory stations 20, 25 or other laboratory stations. The sample 45 has a surface 47. The sample container 40 has an opening 42 at its upper end, where it is held by the chuck 160.

Operation of the sample container transport device 100 is induced by signaling means not shown in the figures, wherein each of the laboratory stations 20, 25 can signal to the electronic control unit 140 that a sample container 40 should be transported between the laboratory stations 20, 25. The electronic control unit 140 is adapted to control the chuck 160 in order to grab, hold and release the sample container 40, and it is further adapted to control the electric motor 130 such that the moving structure 110 moves along the rods 30, 35 between the laboratory stations 20, 25.

The operation of the sample container transport device 100 will now be explained with reference to figs. 1b, 1c. In the state of fig. 1b, the sample container transport device 100 rests, i.e. it is not moving. In this state, the sample container 40 is in a vertical orientation below the sample container transport device 100, corresponding to a horizontally oriented surface 47 of the sample 45. This means that a distance between the surface 47 and the opening 42 of the sample container 40 is equal everywhere on the surface 47. It should be noted that the state shown in fig. 1b can also arise when the sample container transport device 100 is moving with constant velocity.

In the state shown in fig. 1c, the sample container transport device 100 accelerates as shown with an arrow pointing to the right side. In this state, the hinge 150 allows for tilting of the chuck 160 with the sample container 40 such that a lower portion of the sample container 40 is tilted to the left side. As shown in fig. 1c, the surface 47 of the sample 45 is inclined due to acceleration such that its right end is lower than its left end. With the tilting of the sample container 40 allowed by the hinge 150, which has approximately the same angle of inclination as the surface 47, respective distances between the surface 47 and the opening 42 remain approximately identical to the state as shown in fig. 1b. It is easily recognizable that without tilting, the surface 47 would be inclined anyway and a distance between the left end of the surface 47 and the opening 42 would be decreased, thus increasing the likelihood of spilling.

It should be noted that with the embodiment as shown in figs. 1a, 1b and 1c, spilling can be reduced by passive means, without having to actively control tilting.

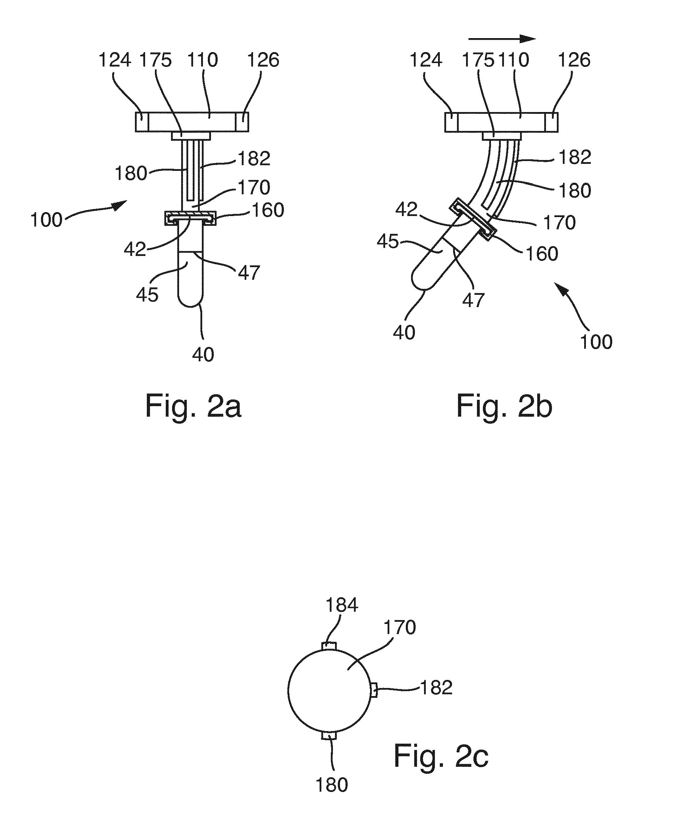

In contrast thereto, figs. 2a, 2b and 2c show a second embodiment of a sample container transport device 100, in which tilting of the sample container 40 is effected actively under electronic control.

Instead of the hinge 150, the sample container transport device 100 according to the second embodiment comprises a flexible bar 170 that is adapted such that it allows tilting of the chuck 160 with the sample container 40. Besides the flexible bar 170, there are arranged a first bimetal stripe 180, a second bimetal stripe 182 and a third bimetal stripe 184. The bimetal stripes 180, 182, 184 are configured such that a current can be applied through each of the bimetal stripes 180, 182, 184 separately. These currents can be controlled by the control unit 140. This allows the control unit 140 to actively effect tilting of the sample container 40 and thus to specifically adapt a tilting angle to current acceleration or deceleration conditions.

In fig. 2a, a resting state is shown corresponding to the state shown in fig. 1b. Consequently, there is no current flowing through the bimetal stripes 180, 182, 184 and the sample container 40 remains in a vertical orientation.

In the state shown in fig. 2b, the moving structure 110 accelerates as shown by the arrow to the right side. Consequently, the control unit 140 applies a current through the second bimetal stripe 182 such that the flexible bar 170 is tilted to the left side with its upper end. This leads to a tilting of the sample container 40 such that its lower end is tilted to the left side. This allows for a very effective and synchronous compensation of the inclination of the surface 47 of the sample 45 such that the risk of spilling is reduced significantly.

Between the flexible bar 170 and the moving structure 110 there is arranged a rotating device 175 that is configured to rotate the flexible bar 170 about a vertical axis. This allows for adaptation of the direction of tilting according to the actual state of acceleration or deceleration. For example, if the moving structure 110 accelerates to the left, tilting of the sample container 40 should be effected in the opposite direction compared to the direction shown in fig. 2b. For this purpose, the rotating device 175 can be controlled by the electronic control unit 140 such that it rotates the bar 170 by 180°. This allows for tilting of the sample container 40 in the opposite direction and thus to reduce spilling also when the moving structure 110 decelerates or accelerates in the other direction.

Fig. 2c shows a cross-sectional view of the flexible bar 170 with the bimetal stripes 180, 182, 184 arranged at an outer surface. As shown, the three bimetal stripes 180, 182, 184 are arranged at the outer surface of the flexible bar 170 at three of four imaginary positions, the four positions being arranged with an angle of 90° between each two neighboring positions. This means that the first bimetal stripe 180 and the second bimetal stripe 184 are arranged with an angle of 180° between them, and the second bimetal stripe 182 is arranged with an angle of 90° to each of the first and third bimetal stripes 180, 184. The second bimetal stripe 182 can be used in order to effect tilting as shown in fig. 2b. The first and third bimetal stripes 180, 184 can be used in order to stabilize the flexible rod 170 during tilting.

## Claims

1. Sample container transport device (100), comprising
- a moving structure (110),
- a holding means (160) to hold a sample container (40) below the moving structure (110), and
- a tilting element (150, 170) connecting the holding means (160) to the moving structure (110) such that the sample container (40) is in a vertical orientation when the moving structure (110) is in a resting state, and that the sample container (40) is able to tilt out of the vertical orientation when the moving structure (110) is in a moving state.

2. Sample container transport device (100) according to claim 1,
**characterized in that**
- the holding means (160) is a chuck being adapted for holding the sample container (40) by contacting the sample container (40) at a top portion of the sample container (40).

3. Sample container transport device (100) according to claim 1 or 2,
**characterized in that**
- the tilting element (150, 170) is a hinge (150), preferably a cardan joint, allowing for free pivotal movement of the holding means (160).

4. Sample container transport device (100) according to claim 1 or 2,
**characterized in that**
- the tilting element (150, 170) is a flexible bar (170).

5. Sample container transport device (100) according to claim 4,
**characterized in that**
- a number of bimetal stripes (180, 182, 184) are arranged at an outer face of the flexible bar (170) for active tilting of the flexible bar (170) by applying electric current through the bimetal stripes (180, 182, 184).

6. Sample container transport device (100) according to claim 5,
**characterized in that**
- the flexible bar (170) is a torsion rod.

7. Sample container transport device (100) according to claim 5 or 6,
**characterized in that**
- exactly three bimetal stripes (180, 182, 184) are arranged at the outer face of the flexible bar (170) at three of four defined positions, the four defined positions being arranged with an angle of 90° between each two neighbouring positions.

8. Sample container transport device (100) according to one of claims 5 to 7,
**characterized by**
- a rotating device (175) connecting the flexible bar (170) to the moving structure (110) for rotating the flexible bar (170) around a vertical axis.

9. Sample container transport device (100) according to one of claims 5 to 8,
**characterized by**
- an electronic control unit (140) being configured to control current flow through each of the bimetal stripes (180, 182, 184).

10. Sample container transport device (100) according to claim 9,
**characterized in that**
- the electronic control unit (140) is configured to effect tilting of the flexible bar (170) by controlling current flow such that an acceleration of the moving structure (110) is compensated at a sample (45) contained in the sample container (40) at least partially.

11. Sample container transport device (100) according to claim 9 or 10,
**characterized in that**
- the electronic control unit (140) is configured to effect tilting of the flexible bar (170) by controlling current flow such that tilting of a bottom part of the sample container (40) is effected opposite to a direction of acceleration of the moving structure (110).

12. Sample container transport device (100) according to one of claims 9 to 11,
**characterized in that**
- the electronic control unit (140) is configured to rotate the flexible bar (170) such that tilting of a bottom part of the sample container (40) is effected opposite to a direction of acceleration of the moving structure (110),
- wherein rotating is preferably performed by a rotating device (175) connecting the flexible bar to the moving structure (110).

13. Sample container transport device (100) according to one of claims 9 to 12, **characterized by**
- a drive unit (130) adapted to drive the moving structure (110),
- the drive unit (130) being controllable by the electronic control unit (140), and
- the electronic control unit (140) being configured to effect tilting of the flexible bar (170) synchronously with the drive unit (130).

14. Laboratory automation system (10), comprising:
- a number of pre-analytical, analytical and/or post-analytical stations (20, 25), and
- a sample container transport device (100) according to anyone of the preceding claims adapted to transport sample containers (40) between the stations (20, 25).
